# EUROPEAN PATENT SPECIFICATION

(11) **EP 3 934 569 B1**
(45) Date of publication and mention of the grant of the patent: **28.09.2022**
(21) Application number: 20707670.4
(22) Date of filing: 06.03.2020
(51) Int. Cl.: A61C 17/02

(54) **TREATMENT APPARATUS FOR TREATING PERI-IMPLANTITIS**
BEHANDLUNGSVORRICHTUNG ZUR BEHANDLUNG VON PERIIMPLANTITIS
APPAREIL DE TRAITEMENT POUR LE TRAITEMENT DE LA PÉRI-IMPLANTITE

(30) Priority: 08.03.2019 EP 19020112
(43) Date of publication of application: 12.01.2022
(73) Proprietor: Dentsply Sirona Inc., York, PA 17401 (US); Sirona Dental Systems GmbH, 64625 Bensheim (DE)
(72) Inventor: SUTTER, Ralf, 64625 Bensheim (DE); EBERHARD, Christian, 64625 Bensheim (DE); SEIFERT, Leo, 64625 Bensheim (DE)
(74) Representative: Özer, Alpdeniz
(86) International application number: PCT/EP2020/056049
(87) International publication number: WO 2020/182669

(56) References cited:
- EP-A1- 2 895 105
- US-A- 4 276 880
- US-A- 6 139 319
- US-A1- 2015 010 882
- US-A1- 2016 157 974

## Description

### TECHNICAL FIELD OF THE INVENTION

The present invention relates to the treatment of peri-implantitis. The present invention more particularly relates to a treatment apparatus for the treatment of peri-implantitis.

### BACKGROUND ART OF THE INVENTION

Peri-implantitis is an inflammatory disease of soft and hard tissue around a dental implant. The disease is initiated by bacterial biofilm and is associated with continuous bone loss around the dental implant, which in extreme cases leads to the loss of the dental implant.

For the treatment of peri-implantitis various methods are used today. However, these are associated with disadvantages. In moderate and severe peri-implantitis, non-surgical treatment is unsuccessful and surgical methods only lead to modest bone gain (Mahato et al., 2015). Surgical treatment, also known as open treatment, requires the use of sterile instruments and media. For example, dentists try to treat the biofilm-exposed implant surface with mechanical instruments such as curettes, cotton wool, ultrasound devices, rotary instruments, titanium brushes, powder blasting equipment or previously available lasers, alone or in combination with rinsing solutions or systemic antibiotic administration.

The removal of the implant surface with a diamond grinder, the so-called implantoplasty, is one of the accepted treatment methods. Although implantoplasty leads to a clean titanium surface, it obviously also leads to irreversible changes in the surface structure. In addition, resulting titanium particles can lead to immune reactions if not completely removed.

Rotary and mechanical instruments such as brushes, curettes, and ultrasonic scalers for cleaning dental implants today usually consist of titanium, carbon or plastic. Depending on the material, the treated dental implant surface is potentially contaminated by the use of these instruments (Sahrmann et al., 2015) and/or damaged, causing particles to enter the wound through abrasions and possibly disrupt the wound healing process through foreign body reactions (Albrektsson et al., 2014).

According to current studies, powder blasting achieves the best cleaning compared to other mechanical processes and cleans the implant surface to some extent, but up to 40% of the exposed surface cannot be reached, especially the undercuts (Sahrmann et al., 2015). A commonly known adverse side effect of powder blasting is emphysema, i.e. the undesired introduction of air into the tissue. In addition, powder blasting equipment currently available on the market is not certified for surgical measures by the manufacturer, as they do not meet the strict hygiene guidelines issued by the legal authorities.

In summary, the disadvantages of all previous mechanical instruments for peri-implantitis treatment is that, firstly, the entire dental implant surface cannot be reached and, secondly, a contaminated surface is left on the dental implant (Klinge et al., 2005) or the original functional properties of the surface are destroyed. Thus, the formation of new bone around the implant, so called reosseointegration, is not favored or even prevented. In contrast, new implants generally grow in the bone-tissue due to their well-established physicochemical properties, as well as their nano- and microstructure, and new bone is formed (Zhao et al., 2005, Lang et al., 2011).

In dentistry, the laser systems which are currently used, also have advantages in accessing the dental implant surfaces, but do not damage the implant surface when operated with suitable settings. However, diode lasers on the one hand are unable to remove a biofilm completely. When using diode lasers, a microbiological eradication and encrustation of the upper biofilm layers occur which protects the underlying microorganisms (Natto et al., 2015). Even if all bacteria are killed, for instance with the use of antibiotics, the matrix of biofilm remains on the surface of the dental implant. Moreover, the resulting immune reaction generally impedes the re-healing of the implant. On the other hand, Er: YAG or Er, Cr: YSGG lasers are not only able to reduce germs, but they can also remove deposits (Aoki et al., 2015). However, the system costs are very high, and the applicators are generally made of sapphire. Sapphire limits the applicator geometry through the difficulties in the processing of the material and leads, in case of filigree design, to potentially fragile applicators.

In various fields of medical technology, applications are commonly known in which fluid is pressurized and used by means of hand-held instruments for the treatment of tissue. By way of example, a surgical water jet dissector, a micro waterjet debriding device and a dental mouth irrigator are known from the prior art and are recited below.

EP1924305 B1 discloses a device which serves to generate a waterjet for cleaning wounds. The device has a handle with a nozzle that is connected via a flexible line to a pressurized liquid container. The nozzle in this application has a needle-shaped configuration. From the user manual of this commercially available device, namely "debritom⁺" of Medaxis, the working distance is specified to be least 3 to 20 cm. Furthermore, for this device the optimal working angle between the waterjet and the wound surface is specified as 3 to 45 degrees. In addition, according to the manufacturer specifications, this waterjet device is suitable for removing wound coverings such as fibrin, necrosis or biofilm. As cleaning media, sterile Ringer's solution, NaCl or polyhexanide-containing solution are used.

In waterjet surgery, waterjet dissectors are commonly used which use fluid under high pressure for the selective cutting of tissue. DE102008025233A1 discloses a surgical waterjet instrument in which the waterjet can be adjusted through a waterjet formation means with respect to its expansion angle and/or its exit energy. This has the purpose of adapting the waterjet to the present tissue. Furthermore, the waterjet formation means may include a swirl element which imparts a rotary flow. The technical field of application of this surgical waterjet instrument is the selective separation of tissues.

US8113832B2 discloses a hand-held oral irrigator with an exchangeable tip. This device is intended for supragingival tooth cleaning. In contrast to the uniform flow rates of debritors, the nonsterile fluid is delivered in pulse rates of 1670 to 1920 pulses/minute. This results in flow rates of 300 to 321 ml/min at pressures up to about 4.5 hPa (4.5 bar).

The maximum purging duration is limited by the integrated liquid reservoir and is specified as 35 seconds. The exchangeable tip has a cross section with conical constriction and is cranked at the distal end.

The documents EP 2 895 105 A1, US 2016/157974, US 6 139 319 A and US 2015/010882 A1 disclose background information useful to understand the present invention. The document US 4 276 880 A discloses the features of the preamble of claim 1.

To summarize: the devices commonly known from the above recited prior art for wound debridement, waterjet surgery, and oral irrigation are neither intended for cleaning inflamed dental implants nor suitable or readily adaptable therefore. The debridement device known from the prior art with the large working distance of at least 3 cm for the treatment of wounds deviates significantly from the objective of treating peri-implantitis. The waterjet dissector known from the prior art is designed to deliver sterile fluids under high pressure. In contrast to the objective of treating peri-implantitis, the waterjet dissector is not intended for the removal of biofilms but serves for the selective separation/dissection of tissues. The oral irrigator known from the prior art is designed for oral use, however, as the cleaning of the inflamed dental implant may involve contacting both the diseased tissue and the bone material, the Robert Koch Institute Hygiene Guidelines requires a sterile application. This requirement cannot be met with an oral irrigator as described in the prior art. In addition, enough cleaning effect regarding the bacterial biofilm cannot be expected in view of the low fluid pressure and the embodiments of the application tip disclosed in the prior art which by no means have the filigree ergonomics that would be required for a subgingival application within the peri-implant pocket. In either of the non-surgical and the surgical treatment of peri-implantitis, the accessibility of hard to reach areas of the dental implant body is a major problem. These areas are the parts of the threads of the dental implant which point towards the bone.

### DISCLOSURE OF THE INVENTION

An objective of the present invention is to provide for the causal treatment of periimplantitis, a technical solution, which allows the removal of the bacterial biofilm from all affected areas, particularly the areas between the dental implant, crown and bone, and at the same time the preservation of the microstructure and the nanostructure of the dental implant surface. Another objective of the present invention is to provide an effective cleaning of the dental implant body without damaging its surface so that the basis for an effective re-healing of the dental implant can be formed. Another objective of the present invention is to provide an ideally gentle treatment as possible.

These objectives are achieved by the treatment apparatus as defined in claim 1. The subject-matter of the dependent claims define further developments.

The treatment apparatus of the present invention is suitable for treating peri-implantitis, and comprises: An application tip that is adapted for insertion into the sub-gingival region between the screw fixture of a dental implant and the surrounding gingiva and/or bone, wherein the length of the application tip is at least equal to the depth of the peri-implant pocket to be treated, and wherein the application tip comprises one or more nozzles for jetting pressurized sterile fluid for removing the bacterial biofilms from the outer surface of the screw fixture of the dental implant in vivo; a handpiece for holding and guiding the application tip; and a supply unit for supplying pressurized sterile fluid to the application tip with at least lObar.

A major advantageous effect of the present invention is that the due to specially designed application tip of the treatment apparatus, the sterile fluid jetted under high pressure from the nozzles can be used either for the open treatment or the closed treatment, i.e., subgingival cleaning of the entire implant body, inclusively the outer surface of the screw fixture. Another major advantageous effect of the present invention is that the need for undergoing open surgery has been obviated, and thus the duration of the treatment, the healing time or the recovery period, pain and other adverse side effects on the patient and the cost of the treatment can be minimized. In addition, cleaning with the pressurized sterile fluid will neither damage nor contaminate the dental implant surface.

Compared to the previous gold standard of mechanical cleaning of a dental implant, namely the powder blasting, the treatment apparatus of the present invention allows the reduction of the previously used three cleaning media i.e., powder, air and water to a single cleaning medium of a sterile fluid. In addition, with the present invention the application of the pressured sterile fluid jet is greatly simplified, and the formation of emphysema can be prevented. The treatment apparatus of the present invention further allows through the filigree design of the applicator tip easy subgingival application and a better accessibility of all surfaces.

According to the present invention, the application tip is formed very thin for the insertion into the sub-gingival region and has, preferably an outer diameter less than 1.5 mm, more preferably an outer diameter less than 1.2 mm, even more preferably an outer diameter less than 1.0 mm. In the case of an outer diameter of 1.2 mm, the inner diameter is preferably 0.6 mm or less. The application tip may be tapered for easy and atraumatic insertion into the peri-implant pocket. The length of the application tip relevant for the treatment must correspond at least to the depth of the peri-implant pocket to be treated and is between 8 and 20 mm. The application tip may have either a straight form, an angled form, an elbow form, or an arched form. The various forms of the application tips allow the dentist to easily access the dental implant in the individual anatomical environment of the patient's mouth. The application tip is made from a rigid material. Alternatively, the entire application tip or at least a part thereof may be made from a bendable material that is suitable to be bent by the dentist into a shape that fits the patient individual peri-implant pocket during the treatment and enable an optimum access. Alternatively, the entire application tip may be rotatable. The application tip may be provided with one or more markings to indicate to the dentist the insertion depth into the peri-implant pocket. The markings may have the form of a scale. The application tip may be detachably attachable to the handpiece for sterilization or disposal. The application tip may be exchangeable, and thus the application tip may be designed as a disposable product or a reusable product. The disposable application tip can be attached sterile to the hand piece for one-time use.

The re-usable applicator tip can be used repeatedly and cleaned, disinfected and/or sterilized between applications in accordance with the guidelines.

According to the present invention, one or more nozzles of the treatment apparatus formed into the distal end of the application tip may jet the pressurized sterile fluid axially and/or laterally. Furthermore, the one or more nozzles may jet the pressurized sterile fluid with either a constant cross section or spreading/widening cross section that is either circular, oval, elongated, rectangular, in particular substantially flat shaped. The generation of a flat shaped jet is particularly advantageous for the treatment of peri-implantitis. The spreading/widening in one plane ensures on the one hand an intensive cleaning effect over the entire surface. On the other hand, the impact of the jet on the surrounding tissue is distance-dependent, and thus the flat shaped jet reduces the risk of damage to the surrounding tissue. The axial and lateral jets with various beam characteristics allow a high cleaning effect at very small treatment distances of a few millimeters, preferably less than 2 millimeters and further reduce the risk of injuries to healthy tissue and still be able to work at high pressure in favor of the cleaning effect.

According to the present invention, the plane of the flat jet can be arbitrarily positioned relative to the application tip and may extend in the lateral and/or axial directions. The flat jet formed by the nozzle preferably has an opening angle within the plane in the range of 20° to 90°, more preferably in the range of 25° to 45°, even more preferably in the range of 30° to 40°. The flat jet preferably forms an opening angle of less than 20° substantially symmetrical in the normal of the plane. In relation to the volume fraction of the flat jet, more than 50 percent of the water quantity is concentrated at the opening angle of preferably less than 10°, more preferably less than 5° out of the plane. The width of the nozzle is preferably larger than the height of the nozzle.

According to the present invention, for the generation of a laterally emerging flat shaped jet, a rectangular shaped nozzle geometry has proven to be suitable, which is preferably arranged substantially horizontally with its short side along the axial direction of the application tip. The sides of such a nozzle are preferably not further apart than the amount of the inner diameter. The height of the nozzle ranges preferably between 40 µm and 200 µm. The width of the nozzle can be determined in accordance with the desired volume flow for a given pressure.

According to the present invention, the supply unit has a tank for storing the sterile fluid, a hose for conducting the pressurized sterile fluid to the application tip, and a pressurizing means connected between the tank and the hose, to pressurize the sterile fluid and feed into the hose. The supply unit may be partly or entirely integrated into the handpiece. The hose may be directly connected to the application tip, and partly accommodated in a duct of the handpiece. Alternatively, the handpiece may have a conduit that connects the application tip and the hose such that the pressurized sterile fluid flows directly through the conduit. In the treatment apparatus the handpiece may be integrated with the application tip and/or the hose as one-piece. Alternatively, the handpiece may be provided with a separate application tip and/or separate hose. The handpiece may be provided as disposable product or a re-useable product. The disposable handpiece is used sterile for one-time. The reusable handpiece can be cleaned, disinfected and/or sterilized between applications in accordance with the guidelines. The hose is light and flexible and has preferably an outer diameter less than 5 millimeters and an inner diameter less than 3 millimeters, more preferably an inner diameter less than 1 millimeter. The hose may be manufactured through extrusion of a single material, or coextrusion of two or more materials. By using suitable materials such as polyurethane (PUR), a sufficiently high compressive strength and buckling stability can be achieved. The hose may have quick connectors, preferably Luer locks at one or both ends to the pressure means or also to the handpiece and may be provided as a disposable product for sterile single use or a re-usable product which can be cleaned, disinfected and/or sterilized between applications in accordance with the guidelines. The pressurizing means may allow the dentist to adjust the pressure and the flow rate of the pressurized sterile fluid. The average flow rate is preferably between 10 and 150 ml / min, more preferably between 60 and 90 ml / min, in combination with an adjustable mean pressure preferably in the range of 10 to 150 bars, more preferably in the range of 50 to 100 bars. The cleaning-effect can be adapted to the treatment situation by adjusting the sterile fluid pressure and the choice of the suitable nozzle geometry and the position of the nozzle on the application tip. The pressurizing means may pressurize the tank containing the sterile fluid directly or indirectly via a mediating medium. Alternatively, the sterile fluid may be sucked from the non-pressurized tank or run under action of gravity to the pressurizing means.

The treatment apparatus may be operated with various sterile fluids such as sterile water (H₂O); sterile water (H₂O) with approximately 3% hydrogen peroxide (H₂O₂); physiological saline (NaCl) solution; Ringer's solution; or chlorhexidine (CHX) solution. Optionally, these solutions may further include particles for promoting the cleansing effect.

The treatment apparatus may be partly or entirely provided as a single-usable or re-usable apparatus whose reusable parts can be accordingly cleaned, disinfected and/or sterilized between the applications in accordance with the guidelines and whose single-usable parts are to be exchanged with sterile new ones. The treatment apparatus may be provided to the end user with at least one tank being pre-filled with either one of the above-mentioned sterile fluids in accordance with the guidelines. Preferably, the tanks are exchangeable for single-use as a consumable and provided separately and pre-filled with the sterile fluid. The tank capacity may be enough for one or more treatments.

### BRIEF DESCRITPION OF THE DRAWINGS

In the subsequent description, the present invention will be described in more detail by using exemplary embodiments and by referring to the drawings, wherein
Fig. 1 - is a schematic side view of a treatment apparatus according to an embodiment of the present invention;
Fig. 2 - is a schematic partial side view of the treatment apparatus according to an embodiment of the present invention, wherein the application tip has a straight form and a the nozzle at the distal end that jets the pressurized sterile fluid laterally;
Fig. 3 - is a schematic partial side view of the treatment apparatus according to another embodiment of the present invention, wherein the application tip has a straight form and a the nozzle at the distal end that jets the pressurized fluid axially;
Fig. 4 - is a schematic partial side view of the treatment apparatus according to another embodiment of the present invention, wherein the application tip has an angled form and the hand piece is rotationally symmetric;
Fig. 5a to 5d - are schematic side views of various application tips with different forms according to alternative embodiments of the present invention;
Fig. 6a to 6i - are schematic partial side views of various application tips with different nozzle configurations according to alternative embodiments of the present invention.

The reference numbers shown in the drawings denote the elements as listed below and will be referred to in the subsequent description of the exemplary embodiments.
- 1.: Treatment apparatus
- 2.: Application tip
- 3.: Nozzle
- 4.: Sterile fluid
- 5.: Handpiece
- 6.: Supply unit
- 7.: Marking
- 8.: Hose
- 9.: Inlet connection means
- 10.: Outlet connection means

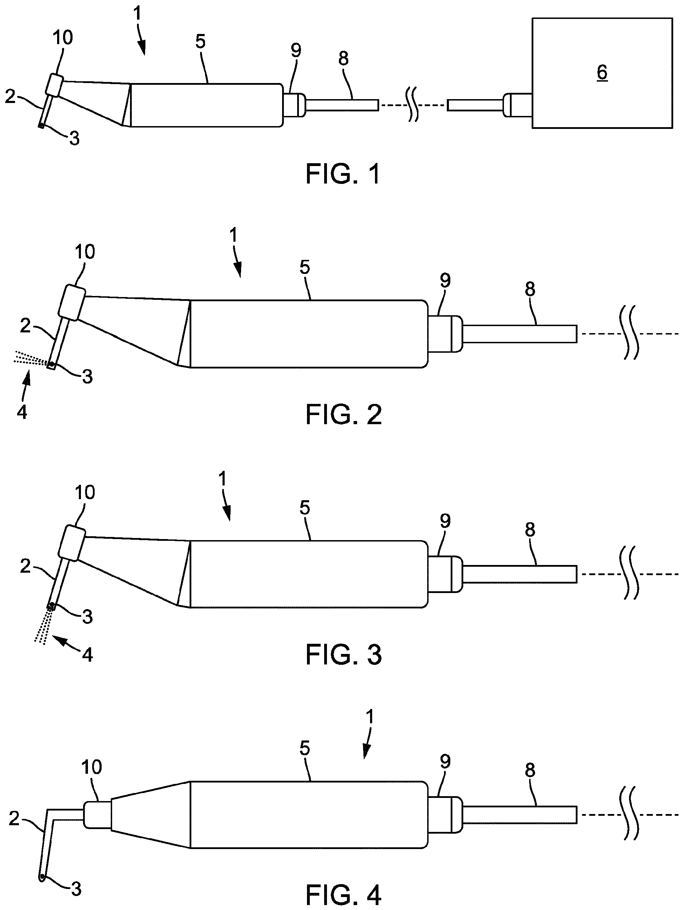

Fig.1 shows a treatment apparatus (1) according to an embodiment for treating periimplantitis. The treatment apparatus (1) has an application tip (2) that is adapted for insertion into the sub-gingival region between the screw fixture of a dental implant and the surrounding gingiva and/or bone. The application tip (2) is formed very thin for the insertion into the sub-gingival region and has, preferably an outer diameter less than 1.5 mm, more preferably an outer diameter less than 1.2 mm and even more preferably an outer diameter less than 1.0 mm. In the case of an outer diameter of 1.2 mm, the inner diameter is preferably 0.6 mm or less.

The length of the application tip (2) is at least equal to the depth of the peri-implant pocket to be treated. The length of the application tip (2) is preferably between 8 and 20 mm. As shown in Fig.2 and Fig. 3, the application tip (2) has one or more nozzles (3) for jetting pressurized sterile fluid (4) for removing the bacterial biofilms from the outer surface of the screw fixture of the dental implant in vivo. The flow rate of the pressurized sterile fluid (4) is preferably between 10 and 150 ml / min, more preferably between 60 and 90 ml / min, in combination with a mean pressure preferably in the range of 10 to 150 hPa (10 to 150 bars). more preferably in the range of 50 to 100 hPa (50 to 100 bars).

The treatment apparatus (1) has a handpiece (5) for holding and guiding the application tip (2). As shown in Fig. 4, the handpiece (5) may also be provided rotationally symmetric such that the orientation of the application tip (2) can be easily adjusted. As shown in Fig.1, the treatment apparatus (1) has a supply unit (6) for supplying pressurized sterile fluid (4) to the application tip (2) with at least 10 hPa (10 bar). The supply unit (6) has a tank, a pressurizing means and a hose (8). The tank is suitable for storing the sterile fluid (4). The pressurizing means is connected between the tank and the hose (8) and is adapted to pressurize the sterile fluid (4) and feed it into the hose (8). The pressurizing means is user adjustable, preferably in the above-mentioned range to allow the dentist to adjust the pressure and the flow rate of the pressurized sterile fluid (4). The hose (8) conducts the pressurized sterile fluid to the application tip (2). For the peri-implantitis treatment, the treatment apparatus (1) must be operated with a sterile fluid (4). The following sterile solutions have a cleaning/rinsing effect and can be used with the treatment apparatus (1): Sterile water (H₂O); sterile water (H₂O) with approximately 3% hydrogen peroxide (H₂O₂); physiological saline (NaCl) solution; Ringer's solution; and chlorhexidine (CHX) solution. These sterile solutions may also include particles for promoting the cleansing effect. The handpiece (5) has a conduit inside the body for conducting the pressurized sterile fluid (4) from the hose (8) to the application tip (2). An inlet connection means (9) is used for connecting the conduit with the hose (8). An outlet connection means (10) is used for connecting the conduit with the application tip (2). In an alternative embodiment (not shown), the hose (8) is directly connected to the application tip (2), namely without the conduit, through a direct connection means. And the end of the hose (8) which is close to the application tip (2) is accommodated in a duct in the body of the handpiece (5).

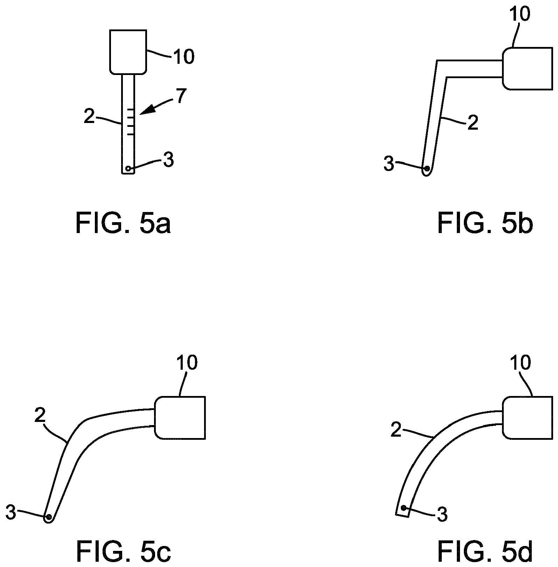

According to various embodiments as shown in Figs. 5a to 5d, the application tip (2) is detachably attachable to the handpiece (5) through the outlet connection means (10) for sterilization or disposal. According to various embodiments as shown in Fig. 5a to 5d, the application tip (2) may have alternative forms. According to another embodiment as shown Fig.5a, the application tip (2) has a straight form. According to another embodiment as shown Fig.5b, the application tip (2) has an angled form. According to another embodiment as shown Fig. 5c, the application tip (2) has an elbow form. According to another embodiment as shown in Fig. 5d, the application tip (2) has an arched form. According to the embodiment as shown in Fig. 5a, the application tip (2) has one or more markings (7) to indicate to the dentist the insertion depth into peri-implant pocket. The application tips (2) in Figs. 5b to 5d may also be provided with markings (7). As shown in Fig.5c, the application tip (2) is tapered for easy and atraumatic insertion into the peri-implant pocket. The application tips (2) in the Figs. 5a, 5b, and 5d may also be provided in tapered form. The application tip (2) is either made from a rigid material or from a bendable material that is suitable to be bent by the dentist into a shape that fits the peri-implant pocket during the treatment. A bendable shape memory alloy may be used.

According to an embodiment as shown in Fig. 2, the treatment apparatus (1) has a nozzle (3) which is formed into the distal end of the application tip (2) and adapted to jet the pressurized sterile fluid laterally.

According to an alternative embodiment as shown in Fig. 3, the treatment apparatus (1) has a nozzle (3) which is formed into the distal end of the application tip (2) and adapted to jet the pressurized sterile fluid axially.

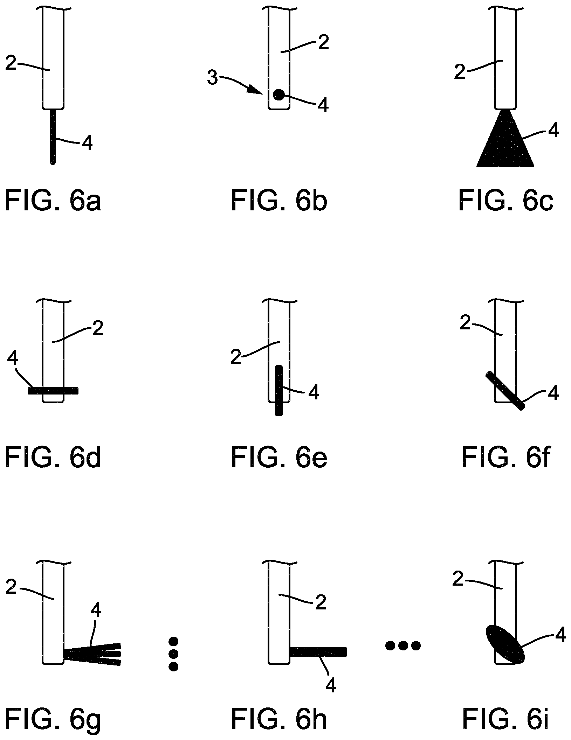

According to various alternative embodiments as shown in Fig. 6a to 6i, the nozzles (3) are each adapted to jet the pressurized sterile fluid (4) with either a spreading cross section or a constant cross section that is either circular, oval, elongated, rectangular or flat shaped.

According to an embodiment as shown in Fig. 6a, the application tip (2) has a nozzle (3) which ejects the pressurized sterile fluid (4) axially with a circular and constant cross section. According to another embodiment as shown in Fig. 6b, the application tip (2) has a nozzle (3) which ejects the pressurized sterile fluid (4) laterally with a circular and constant cross section. According to an embodiment as shown in Fig. 6c, the application tip (2) has a nozzle (3) which ejects the pressurized sterile fluid (4) axially with an elongated and spreading cross section. According to an embodiment as shown in Fig. 6d, the application tip (2) has a nozzle (3) which ejects the pressurized sterile fluid (4) laterally with a horizontally elongated spreading cross section. According to an embodiment as shown in Fig. 6e, the application tip (2) that has a nozzle (3) which ejects the pressurized sterile fluid (4) laterally with a vertically elongated spreading cross section. According to an embodiment as shown in Fig. 6f, the application tip (2) has a nozzle (3) which ejects the pressurized sterile fluid (4) laterally with an obliquely elongated spreading cross section. According to an embodiment as shown in Fig. 6g, the application tip (2) has, preferably three vertically arrayed nozzles (3) which eject the pressurized sterile fluid (4) laterally with circular and constant cross sections respectively. According to an embodiment as shown in Fig. 6h, the application tip (2) has preferably three circumferentially arrayed nozzles (3) which eject the pressurized sterile fluid (4) laterally with circular and constant cross sections respectively. According to an embodiment as shown in Fig. 6i, the application tip (2) that has a nozzle (3) which ejects the pressurized sterile fluid (4) laterally with an obliquely oval spreading cross section.

According to the embodiment as shown in Fig. 1, the treatment apparatus (1) has a plurality of separate parts. The handpiece (5), the application tip (2), and the hose (8) are provided separately. These parts may be provided for single-use and/or re-use. Alternatively, the handpiece (5) may be integrally provided, as one-piece, with the application tip (2) and/or the hose (8) for single-use or re-use.

## Claims

1. A treatment apparatus (1) for treating peri-implantitis, comprising: an application tip (2) that is adapted for insertion into the sub-gingival region between the screw fixture of a dental implant and the surrounding gingiva and/or bone, wherein the length of the application tip (2) relevant for the treatment must correspond to at least to the depth of the peri-implant pocket to be treated and is between 8 mm to 20 mm, and wherein the application tip (2) comprises one or more nozzles (3) for jetting pressurized sterile fluid (4) for removing the bacterial biofilms from the outer surface of the screw fixture of the dental implant in vivo;
a handpiece (5) for holding and guiding the application tip (2); **characterized by** comprising
a supply unit (6) for supplying pressurized sterile fluid (4) with at least 10 hPa (10 bar) to the application tip (2).

2. The treatment apparatus (1) according to claim 1, **characterized in that** the application tip (2) is tapered for easy and atraumatic insertion into the peri-implant pocket.

3. The treatment apparatus (1) according to claim 1 or 2, **characterized in that** the application tip (2) has either a straight form, an angled form, an elbow form, an arched form, an s-shaped form, or a combination of one or more of the said forms.

4. The treatment apparatus (1) according to any one of claims 1 to 3, **characterized in that** the application tip (2) is either made from a rigid material or a bendable material that is suitable to be bent by the dentist into a shape that fits the peri-implant pocket during the treatment.

5. The treatment apparatus (1) according to any one of claims 1 to 4, **characterized in that** the application tip (2) comprises one or more markings (7) to indicate to the dentist the insertion depth into peri-implant pocket.

6. The treatment apparatus (1) according to any one of claims 1 to 5, **characterized in that** the application tip (2) is detachably attachable for sterilization or disposal.

7. The treatment apparatus (1) according to any one of claims 1 to 6, **characterized in that** one or more nozzles (3) are formed into the distal end of the application tip (2) and wherein each nozzle (3) is adapted to jet the pressurized sterile fluid axially or laterally.

8. The treatment apparatus (1) according to any one of claims 1 to 7, **characterized in that** one or more nozzles (3) are each adapted to jet the pressurized sterile fluid (4) with either a spreading cross section or a constant cross section that is either circular, oval, elongated, rectangular or substantially flat shaped.

9. The treatment apparatus (1) according to claim 7 and 8, **characterized in that** at least one nozzle (3) is adapted to jet the pressurized sterile fluid (4) laterally in a substantially horizontal plane perpendicular to axial direction of the application tip (2), and further adapted to jet the pressurized sterile fluid (4) with a spreading cross section substantially rectangular shaped, wherein the height of the nozzle (3) in the axial direction of the application tip (2) ranges between 40 µm and 200 µm, wherein the width of the nozzle (3) is larger than the height of the nozzle (3), wherein the nozzle (3) has an opening angle in the circumferential direction in the range of 10° to 180°, and wherein the nozzle (3) has an opening angle in the axial direction which is less than the opening angle in the circumferential direction.

10. The treatment apparatus (1) according to any one of claims 1 to 9, **characterized in that** the supply unit (6) comprises:
a tank that is suitable for storing the sterile fluid (4);
a hose (8) for conducting the pressurized sterile fluid to the application tip (2); and
a pressurizing means connected between the tank and the hose (8) and adapted to pressurize the sterile fluid (4) and feed into the hose (8).

11. The treatment apparatus (1) according to claim 10, **characterized in that** the handpiece (5) comprises:
a conduit for conducting the pressurized sterile fluid (4);
an inlet connection means (9) for connecting the conduit with the hose (8); and
an outlet connection means (10) for connecting the conduit with the application tip (2).

12. The treatment apparatus (1) according to claim 10, **characterized by** further comprising: a direct connection means for directly connecting the application tip (2) with the hose (8), wherein the handpiece (5) has a duct for accommodating the hose (8).

13. The treatment apparatus (1) according to any one of claims 10 to 12, **characterized in that** the handpiece (5) is integrally provided, as one-piece, with the application tip (2) and/or the hose (8).

14. The treatment apparatus (1) according to any one of claims 1 to 13, **characterized in that** supply unit (6) is partly or entirely integrated into the portable handpiece (5).

15. The treatment apparatus (1) according to any one of claims 10 to 14, **characterized in that** the pressurizing means is further adapted to allow the dentist to adjust the pressure preferably in the range of 10 to 150 hPa (10 to 150 bars), and the flow rate of the pressurized sterile fluid (4) preferably in the range of 10 to 150 ml / min.

## Patentansprüche

1. Behandlungsvorrichtung (1) zur Behandlung von Periimplantitis, umfassend:
eine Applikationsspitze (2), die zum Einführen in den subgingivalen Bereich zwischen der Verschraubung eines Zahnimplantats und der umgebenden Gingiva und/oder dem Knochen vorgesehen ist, wobei die für die Behandlung relevante Länge der Applikationsspitze (2) mindestens bis zur Tiefe der zu behandelnden Periimplantattasche übereinstimmen muss, und zwischen 8 mm bis 20 mm beträgt, und wobei die Applikationsspitze (2) eine oder mehrere Düsen (3) zum Ausstoßen von druckbeaufschlagtem sterilem Fluid (4) zum Entfernen der bakteriellen Biofilme von der Außenfläche der Verschraubung des Zahnimplantats in vivo umfasst;
ein Handstück (5) zum Halten und Führen der Applikationsspitze (2); **dadurch gekennzeichnet, dass** es umfasst
eine Zufuhreinheit (6) zum Zuführen von druckbeaufschlagtem sterilem Fluid (4) mit mindestens 10 hPa (10 bar) zur Applikationsspitze (2).

2. Behandlungsvorrichtung (1) nach Anspruch 1, **dadurch gekennzeichnet, dass** die Applikationsspitze (2) zum leichten und atraumatischen Einführen in die Periimplantattasche verjüngt ist.

3. Behandlungsvorrichtung (1) nach Anspruch 1 oder 2, **dadurch gekennzeichnet, dass** die Applikationsspitze (2) entweder eine gerade Form, eine Winkelform, eine Ellenbogenform, eine Bogenform, eine S-Form oder eine Kombination von einer oder mehreren der Formen hat.

4. Behandlungsvorrichtung (1) nach irgendeinem der Ansprüche 1 bis 3, **dadurch gekennzeichnet, dass** die Applikationsspitze (2) entweder aus einem starren Material oder einem biegsamen Material besteht, das dazu geeignet ist, vom Zahnarzt während der Behandlung in eine passende Form gebogen zu werden, die zur Periimplantattasche passt.

5. Behandlungsvorrichtung (1) nach irgendeinem der Ansprüche 1 bis 4, **dadurch gekennzeichnet, dass** die Applikationsspitze (2) eine oder mehrere Markierungen (7) umfasst, um dem Zahnarzt die Einführtiefe in die Periimplantattasche anzuzeigen.

6. Behandlungsvorrichtung (1) nach irgendeinem der Ansprüche 1 bis 5, **dadurch gekennzeichnet, dass** die Applikationsspitze (2) zur Sterilisation oder Entsorgung lösbar befestigbar ist.

7. Behandlungsvorrichtung (1) nach irgendeinem der Ansprüche 1 bis 6, **dadurch gekennzeichnet, dass** eine oder mehrere Düsen (3) in das distale Ende der Applikationsspitze (2) eingeformt sind, und wobei jede Düse (3) ausgelegt ist, das druckbeaufschlagte sterile Fluid axial oder lateral auszustoßen.

8. Behandlungsvorrichtung (1) nach irgendeinem der Ansprüche 1 bis 7, **dadurch gekennzeichnet, dass** eine oder mehrere Düsen (3) jeweils ausgelegt sind, um das druckbeaufschlagte sterile Fluid (4) entweder mit einem sich ausbreitenden Querschnitt oder einem konstanten Querschnitt, der entweder kreisförmig, oval, länglich, rechteckig oder im Wesentlichen flach geformt ist, auszustoßen.

9. Behandlungsvorrichtung (1) nach Anspruch 7 und 8, **dadurch gekennzeichnet, dass** mindestens eine Düse (3) ausgelegt ist, um das druckbeaufschlagte sterile Fluid (4) seitlich in einer im Wesentlichen horizontalen Ebene senkrecht zur axialen Richtung der Applikationsspitze (2) auszustoßen und ferner ausgelegt ist, um das druckbeaufschlagte sterile Fluid (4) mit einem sich ausbreitenden Querschnitt im Wesentlichen rechteckig auszustoßen, wobei die Höhe der Düse (3) in der axialen Richtung der Applikationsspitze (2) im Bereich zwischen 40 µm und 200 µm liegt, wobei die Breite der Düse (3) größer als die Höhe der Düse (3) ist, wobei die Düse (3) einen Öffnungswinkel in Umfangsrichtung im Bereich von 10° bis 180° hat, und wobei die Düse (3) einen Öffnungswinkel in axialer Richtung hat, der kleiner als der Öffnungswinkel in Umfangsrichtung ist.

10. Behandlungsvorrichtung (1) nach irgendeinem der Ansprüche 1 bis 9, **dadurch gekennzeichnet, dass** die Zufuhreinheit (6) umfasst:
einen Tank, der dazu geeignet ist, das sterile Fluid (4) zu speichern;
einen Schlauch (8) zum Leiten des druckbeaufschlagten sterilen Fluids zur Applikationsspitze (2); und
eine Druckbeaufschlagungseinrichtung, die zwischen dem Tank und dem Schlauch (8) angeschlossen und ausgelegt ist, um das sterile Fluid (4) mit Druck zu beaufschlagen und in den Schlauch (8) einzuspeisen.

11. Behandlungsvorrichtung (1) nach Anspruch 10, **dadurch gekennzeichnet, dass** das Handstück (5) umfasst:
eine Leitung zum Leiten des druckbeaufschlagten sterilen Fluids (4);
eine Einlassverbindungseinrichtung (9) zum Verbinden der Leitung mit dem Schlauch (8); und
eine Auslassverbindungseinrichtung (10) zum Verbinden der Leitung mit der Applikationsspitze (2).

12. Behandlungsvorrichtung (1) nach Anspruch 10, **dadurch gekennzeichnet, dass** sie ferner umfasst: ein Direktverbindungsmittel zum direkten Verbinden der Applikationsspitze (2) mit dem Schlauch (8), wobei das Handstück (5) einen Kanal zum Aufnehmen des Schlauchs (8) hat.

13. Behandlungsvorrichtung (1) nach irgendeinem der Ansprüche 10 bis 12, **dadurch gekennzeichnet, dass** das Handstück (5) mit der Applikationsspitze (2) und/oder dem Schlauch (8) einteilig bereitgestellt ist.

14. Behandlungsvorrichtung (1) nach irgendeinem der Ansprüche 1 bis 13, **dadurch gekennzeichnet, dass** die Zufuhreinheit (6) teilweise oder vollständig in das tragbare Handstück (5) integriert ist.

15. Behandlungsvorrichtung (1) nach irgendeinem der Ansprüche 10 bis 14, **dadurch gekennzeichnet, dass** die Druckbeaufschlagungseinrichtung ferner darauf ausgelegt ist, dem Zahnarzt zu ermöglichen, den Druck vorzugsweise im Bereich von 10 bis 150 hPa (10 bis 150 bar), und die Flussrate des druckbeaufschlagten sterilen Fluids (4) vorzugsweise im Bereich von 10 bis 150 ml/min einzustellen.

## Revendications

1. Appareil de traitement (1) pour le traitement de la péri-implantite, comprenant :
une pointe d'application (2) qui est adaptée pour être insérée dans la région sous-gingivale entre la fixation à vis d'un implant dentaire et la gencive et/ou l'os environnant(s), la longueur de la pointe d'application (2) pertinente pour le traitement devant correspondre au moins à la profondeur de la poche péri-implantaire à traiter et étant comprise entre 8 mm et 20 mm et la pointe d'application (2) comprenant une ou plusieurs buses (3) permettant d'éjecter un fluide stérile sous pression (4) pour retirer les biofilms bactériens de la surface extérieure de la fixation à vis de l'implant dentaire in vivo ;
une pièce à main (5) destinée au maintien et au guidage de la pointe d'application (2) ; **caractérisé en ce qu'**il comprend
une unité d'alimentation (6) permettant de fournir un fluide stérile sous pression (4) sous au moins 10 hPa (10 bar) à la pointe d'application (2).

2. Appareil de traitement (1) selon la revendication 1, **caractérisé en ce que** la pointe d'application (2) est effilée pour une insertion aisée et atraumatique dans la poche péri-implantaire.

3. Appareil de traitement (1) selon la revendication 1 ou 2, **caractérisé en ce que** la pointe d'application (2) a une forme soit droite, soit inclinée, soit coudée, soit arquée, soit en S, soit selon une combinaison d'une ou de plusieurs desdites formes.

4. Appareil de traitement (1) selon l'une quelconque des revendications 1 à 3, **caractérisé en ce que** la pointe d'application (2) est réalisée soit en un matériau rigide, soit en un matériau pliable apte à être plié par le dentiste dans une forme s'adaptant à la poche péri-implantaire pendant le traitement.

5. Appareil de traitement (1) selon l'une quelconque des revendications 1 à 4, **caractérisé en ce que** la pointe d'application (2) comprend un ou plusieurs repères (7) pour indiquer au dentiste la profondeur d'insertion dans la poche péri-implantaire.

6. Appareil de traitement (1) selon l'une quelconque des revendications 1 à 5, **caractérisé en ce que** la pointe d'application (2) peut être fixée de manière amovible pour la stérilisation ou pour l'élimination.

7. Appareil de traitement (1) selon l'une quelconque des revendications 1 à 6, **caractérisé en ce qu'**une ou plusieurs buses (3) sont formées dans l'extrémité distale de la pointe d'application (2) et dans lequel chaque buse (3) est adaptée pour éjecter axialement ou latéralement le fluide stérile sous pression.

8. Appareil de traitement (1) selon l'une quelconque des revendications 1 à 7, **caractérisé en ce qu'**une ou plusieurs buses (3) sont chacune adaptées pour éjecter le fluide stérile sous pression (4) à travers soit une section d'étalement, soit une section constante qui est de forme circulaire, ovale, allongée, rectangulaire ou sensiblement plate.

9. Appareil de traitement (1) selon la revendication 7 et 8, **caractérisé en ce qu'**au moins une buse (3) est adaptée pour éjecter le fluide stérile sous pression (4) latéralement dans un plan sensiblement horizontal perpendiculaire à la direction axiale de la pointe d'application (2) et adaptée en outre pour éjecter le fluide stérile sous pression (4) à travers une section d'étalement de forme sensiblement rectangulaire, la hauteur de la buse (3) dans la direction axiale de la pointe d'application (2) étant comprise entre 40 µm et 200 µm, la largeur de la buse (3) dépassant la hauteur de la buse (3), la buse (3) ayant un angle d'ouverture dans la direction circonférentielle dans la plage de 10° à 180° et la buse (3) ayant un angle d'ouverture dans la direction axiale inférieur à l'angle d'ouverture dans la direction circonférentielle.

10. Appareil de traitement (1) selon l'une quelconque des revendications 1 à 9, **caractérisé en ce que** l'unité d'alimentation (6) comprend :
un réservoir adapté au stockage du fluide stérile (4) ;
un tuyau (8) permettant de conduire le fluide stérile sous pression jusqu'à la pointe d'application (2) ; et
un moyen de pressurisation, raccordé entre le réservoir et le tuyau (8) et adapté pour pressuriser le fluide stérile (4) et pour alimenter le tuyau (8).

11. Appareil de traitement (1) selon la revendication 10, **caractérisé en ce que** la pièce à main (5) comprend :
un conduit permettant de conduire le fluide stérile sous pression (4) ;
un moyen de raccordement d'entrée (9) permettant de raccorder le conduit au tuyau (8) ; et
un moyen de raccordement de sortie (10) permettant de raccorder le conduit à la pointe d'application (2).

12. Appareil de traitement (1) selon la revendication 10, **caractérisé en ce qu'**il comprend en outre : un moyen de raccordement direct permettant de raccorder directement la pointe d'application (2) au tuyau (8), la pièce à main (5) comportant un manchon de logement du tuyau (8).

13. Appareil de traitement (1) selon l'une quelconque des revendications 10 à 12, **caractérisé en ce que** la pièce à main (5) fait corps, en un seul tenant, avec l'embout d'application (2) et/ou avec le tuyau (8).

14. Appareil de traitement (1) selon l'une quelconque des revendications 1 à 13, **caractérisé en ce que** l'unité d'alimentation (6) est partiellement ou entièrement intégrée à la pièce à main portative (5).

15. Appareil de traitement (1) selon l'une quelconque des revendications 10 à 14, **caractérisé en ce que** le moyen de pressurisation est en outre adapté pour permettre au dentiste de régler la pression de préférence dans la plage de 10 à 150 hPa (10 à 150 bar) et le débit du fluide stérile sous pression (4) de préférence dans la plage de 10 à 150 ml/min.
